# EUROPÄISCHE PATENTANMELDUNG

(11) **EP 1 719 400 A1**
(43) Veröffentlichungstag der Anmeldung: **08.11.2006**
(21) Anmeldenummer: 06007359.0
(22) Anmeldetag: 07.04.2006
(51) Int. Cl.: A01D 34/66

(54) **Mähbalken für Scheibenmähwerke**

(30) Priorität: 06.05.2005 DE 202005007424 U
(71) Anmelder: CLAAS Saulgau GmbH, 88348 Bad Saulgau (DE)
(72) Erfinder: Biesenberger, Ulrich, 88348 Bad Saulgau (DE)

(57) **Zusammenfassung**

Mähbalken (1) für ein Scheibenmähwerk zum Anbau oder zur Anhängung an Traktoren oder selbstfahrenden Erntemaschinen mit wenigstens zwei benachbarten um aufrechte Drehachsen (6) umlaufend angetriebenen, mit wenigstens zwei an Zapfen (4) gelagerten frei beweglichen Mähklingen (3) besetzten Mähscheiben (2), die unterhalb der Mähscheiben (2) in einem die Mähscheiben (2) aufnehmenden Maschinengestell (7) gelagert sind, wobei wenigstens einer Mähscheibe (2) in Fahrtrichtung (F) wenigstens ein Stängelheber (8) vorgelagert ist.

## Beschreibung

Die Erfindung betrifft einen Mähbalken für Scheibenmähwerke zur Verbesserung der Schnittqualität für den landwirtschaftlichen Einsatz in der Grünfutterernte gemäß dem Oberbegriff des unabhängigen Anspruchs 1.

### Stand der Technik

Bekannt sind Scheibenmähwerke mit umlaufenden Mähwerkzeugen, deren Mähklingen frei- bzw. schwenkbeweglich am Umfang der Mähscheiben an einem Zapfen aufgehängt sind. Die Mähklingen werden erst durch die Zentrifugalkraft stabilisiert und mähen das Grünfutter dann ohne Gegenschneide ab.

Derartige Mähwerke gibt es in vielfältigen Variationen wie Heck- Seiten-, Front- und gezogene Mähwerke, selbstfahrende Mähwerke und auch als Vorsatzgeräte für selbstfahrende Feldhäcksler zur Ernte von Grünfutter.

### Aufgabenstellung

Die Aufgabe der Erfindung besteht darin, das Schnittbild von Scheibenmähwerken insgesamt und insbesondere für am Boden liegende Futterbestände zu verbessern, um damit einerseits unnötige Futterverluste zu vermeiden und andererseits auch, um das Schnittbild in seiner. Gesamtheit zu verbessern, welches ein optisch gefälligeres Gesamtbild im Sinne einer harmonischen Landschaftspflege beitragen soll. Ein weiterer wesentlicher Gesichtspunkt ist dabei auch, den Wiederaufwuchs des nachwachsenden Grünfutters durch gleichmäßige Stoppellänge zu verbessern, um dadurch einen gleichmäßigen Wiederaufwuchs zu gewährleisten.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht dabei vor, dass den Mähscheiben in Fahrtrichtung wenigstens' ein, vorzugsweise zwei oder auch mehrere Stängelheber vorgelagert sind, die dazu dienen, am Boden liegendes Futter wieder aufzurichten, bevor die Mähklingen dieses nunmehr wieder aufgerichtete Futter erreichen und abmähen. Dieses verkürzt die Stoppellänge in liegenden Futterbeständen, welches einen Zugewinn an geernteter Grünfuttermasse darstellt.

Zu dem hat dieses den Vorteil, dass von diesem Stängelheber eine stabilisierende Wirkung ausgeht, die darauf einwirkt, dass die Luftströmungen, die von den rotierenden Mähscheiben erzeugt werden, das Futter nicht an den Erdboden drücken, bevor es von den Mähklingen erfasst wird, welches ansonsten ebenfalls zu einer unnötigerweise größeren Stoppellänge und damit zu Futterverlusten führen würde.

Die unerwünschte Vergrößerung der Stoppellänge ist zudem auch bekannt unter dem Begriff der Streifenbildung, welche auf das Zusammenwirken ungünstiger Einflüsse während des Mähens zurück zu führen ist, welches aber immer darauf zurück zu führen ist, dass das Grünfutter nicht im aufrecht stehenden Zustand von den Mähklingen erfasst wird.

Dieses ist in besonderem Maße nicht nur aus optischen Gründen unerwünscht, sondern, da dieses hinsichtlich des Wiederauswachsens des Futters zu weiteren unerwünschten Nebeneffekten führt, insbesondere zu unterschiedlichem Wiederaufwuchs des Futters, wobei der Wiederaufwuchs im Bereich der größeren Stoppellänge einen hohen Ligningehalt aufweist, der eine geringer werdende Schmackhaftigkeit des Grünfutters beinhaltet, und wobei sich dadurch auch unerwünschte Geilstellen mit zunehmender Verunkrautung bilden.

Die Vorteile der Erfindung tragen dazu bei, die vorgenannten Nachteile entweder völlig zu unterbinden oder in extremen Verhältnissen diese zumindest geringer in ihren Auswirkungen zu halten.

Die den rotieren Mähklingen vorgelagerten Stängelheber sind so angeordnet und ausgestaltet, dass sie das am Boden liegende Futter aufrichten, bevor es von den Mähklingen erfasst wird. Dabei weisen die vorgelagerten Stängelheber gegenüber dem Erdboden Führungselemente mit einer ansteigenden Gleitfläche auf, die vorzugsweise von einem Gleitflächenelement aus Kunststoff gebildet werden.

Vorzugsweise ist dieses Gleitflächenelement als nach unten offenes V wie eine Dachfläche ausgebildet. Dieses Element wird von einem Tragarm aufgenommen, der als Kragarm ausgebildet ist und der unterhalb der Mähscheiben an dem Maschinengestell abgestützt wird, wobei dieses Maschinengestell bei Scheibenmähern gleichzeitig ein Getriebegehäuse zum Antrieb der Mähscheiben darstellt. In einer weiteren vorteilhaften Ausgestaltung der Erfindung kann das Gleitflächenelement als auswechselbares Teil ausgebildet sein.

Der als Kragarm ausgebildete Stängelheber ist erfindungsgemäß unterhalb der Schneidebene der Mähscheiben entweder direkt oder indirekt durch die Befestigung an einer Gleitkufe an dem Maschinengestell (Antriebsgehäuse) abgestützt

Um im Falle des Auftreffens eines Stängelhebers auf ein Hindemis, und in dessen Folge eine Beschädigung desselben, die Arbeit möglichst schnell fortsetzen zu können, ist der Kragarm an seinem eingespannten Ende vorteilhafter weise durch eine Klemmverbindung lös- und austauschbar an dem Maschinengestell abgestützt, so dass ein beschädigtes Teil vor Ort schnell durch Ersatz ausgewechselt werden kann.

In einer weiteren vorteilhaften Ausgestaltung der Erfindung ist der wenigstens eine Stängelheber an einer Gleitkufe befestigt, die in bekannter Weise unterhalb des Getriebegehäuses des Mähbalkens angebracht und an diesem abgestützt ist, und die ihrerseits das Getriebegehäuse selbst gegen verschleißbedingten Abrieb schützt. Dabei kann die Halterung eines Stängelhebers auch an dieser Gleitkufe sowohl fest als auch lösbar angebracht sein. Auch diese Gleitkufen sind als auswechselbare Verschleißteile ausgestaltet, so dass auch fest mit den Gleitkufen verbundene Stängelheber damit gleichzeitig als auswechselbare Ersatzteile nachgeliefert und bezogen und bevorratet werden können, und welches somit ebenfalls einen Vorteil der Erfindung darstellt. Auch können damit bereits im Einsatz befindliche Mähwerke nachgerüstet werden, so dass auch diese von den Vorteilen der Erfindung profitieren können

### Ausführungsbeispiel

Nähere Einzelheiten der Erfindung sind den nachfolgenden Figurendarstellungen und deren Beschreibungen zu entnehmen.

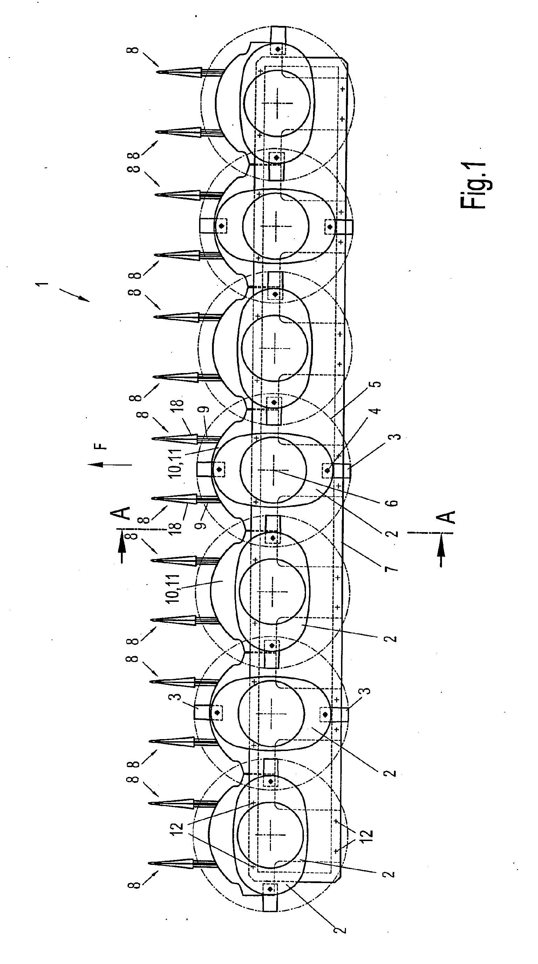

Fig.1 zeigt ein Ausführungsbeispiel eines erfindungsgemäßen Mähbalkens 1 mit beispielsweise sieben Mähscheiben 2, wobei diesen die erfindungsgemäßen Stängelheber 8 in Fahrtrichtung F vorgelagert sind.

Diese Art von Mähbalken 1 eignen sich prinzipiell für alle Scheibenmähwerke zum Anbau oder zur Anhängung an Traktoren oder selbstfahrenden Erntemaschinen. Mähbalken 1 dieser Art weisen mehrere quer zur Fahrrichtung F nebeneinander und benachbarte, um aufrechte Drehachsen 6 umlaufend angetriebene, mit wenigsten zwei Mähklingen 3 besetzten Mähscheiben 2 auf, die unterhalb der Mähscheiben in einem die Lagerungen der Mähscheiben aufnehmenden Maschinengestell 7 gelagert sind. Die frei beweglichen Mähklingen 3 sind an Zapfen 4 aufgehängt und schwenkbar gelagert, wobei die freien Enden der Mähklingen 3 unter Einwirkung der Zentrifugalkraft während ihres Umlaufs die sich gegenseitig überdeckenden Flugkreise 5 beschreiben.

In dem dargestellten Ausführungsbeispiel sind den einzelnen Mähscheiben 2 je zwei Stängelheber 8 in Fahrtrichtung F vorgelagert.. Die Anzahl der vorgelagerten Stängelheber 8 kann alternativ durchaus zwischen einem und mehreren als zwei pro Mähscheibe 2 variieren.

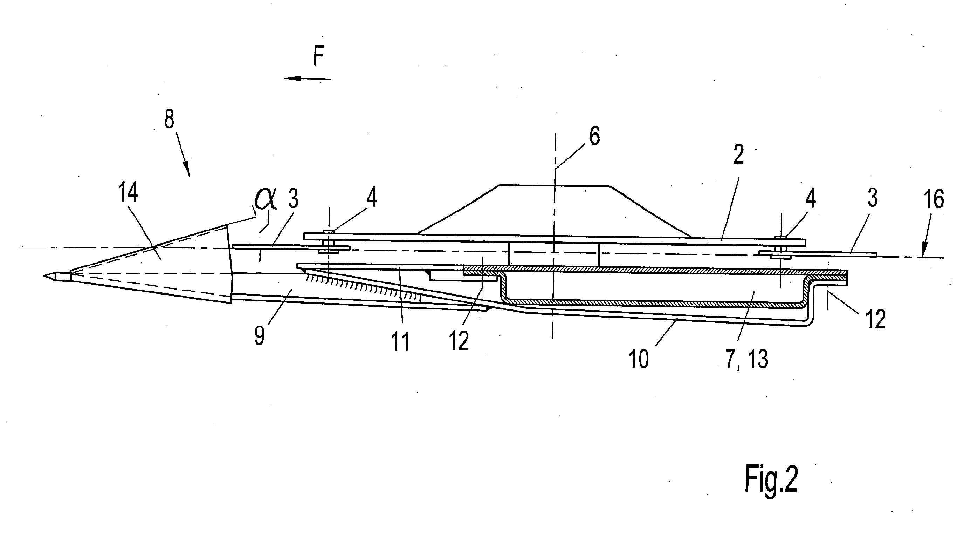

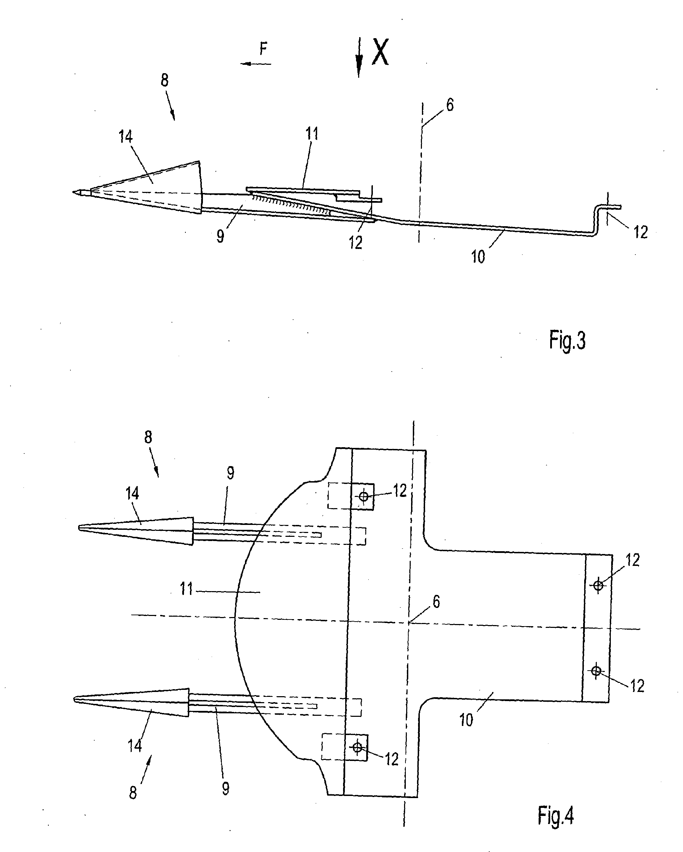

Fig.2 zeigt den Schnitt A-A durch dem Mähbalken 1 gemäß Fig. 1, und Fig. 3. zeigt die Seitenansicht einer Gleitkufe 10 nunmehr als Einzelteil dargestellt, wobei Fig. 4 die Draufsicht der in Fig. 3 dargestellten Gleitkufe 10 mit Blickrichtung X zeigt.

Das Maschinengestell 7 besteht aus einem Kastenprofil 13 und es nimmt in seinem Innenraum in bekannter weise die Antriebselemente der Mähscheiben auf, die jedoch der besseren Übersicht halber nicht mit dargestellt sind. Dem Fachmann ist der Aufbau dieses Antriebs bekannt. Unterhalb des Kastenprofils 13 und unterhalb der Mähscheiben 2 befinden sich die Gleitkufen 10 mit ihrem Gleitkufenvorbau 11, welche die Mähscheiben 2 vor Beschädigungen schützen und als Anfahrschutz dienen. Die Gleitkufen 10 sind in ihren Befestigungspunkten 12 mit dem Kastenprofil 13 des Maschinengestells 7 durch nicht näher dargestellte Schraubenverbindungen verschraubt und sie sind somit lösbar mit dem Maschinengestell 7 verbunden.

An den Gleitkufen 10 sind die Kragarme 9 des Stängelhebers 8 verschweist. Frontseitig am freien Ende des Kragarmes 9 ist das Gleitflächenelement des Stängelhebers 8 befestigt. Es ist v-förmig nach unten geöffnet und somit dachförmig ausgebildet, wobei der Dachfirst als ansteigende Gleitfläche 15 gegenüber der Rotationsebene 16 der Mähklingen 2 einen spitzen Winkel α einnimmt. Das Gleitflächenelement 14 kann beispielsweise als abgekantetes Blech mit dem Kragarm 9 fest verschweist sein, aber auch lösbar mit diesem verschraubt sein. Ebenfalls kann das Gleitflächenelement 14 auch als auswechselbares Kunststoffteil ausgebildet sein.

In Fig. 3 bzw. Fig.4 ist ein Ausführungsbeispiel einer Gleitkufe 10 dargestellt, bei der der Kragarm 9 und der Stängelheber 8 mit der Gleitkufe 10 als Ganzes eine feste Einheit bilden, und wobei diese so ausgestaltet ist, dass sie ebenfalls als Verschleißteil, und damit als Teil eines Mähbalkens 1 auswechselbar ist. Dazu dienen in dem dargestellten Ausführungsbeispiel die Befestigungspunkte 12 als Bohrungen, mit denen die Gleitkufe 10 mit dem Kastenprofil 13 als Maschinengestell 7 des Mähbalkens 1 verschraubbar ist. In diesem Ausführungsbeispiel sind die Kragarme 9 des Stängelhebers 8 mit der Gleitkufe 10 zwar fest verschweißt, wobei die Schweißverbindung aber durchaus auch durch eine Klemmverbindung, z.B. durch eine Einsteckhülse mit einer Klemmschraube ersetzt sein kann. Vorteilhafterweise kann der Kragarm 9 dann aus Rundstahl gefertigt sein, der dann formschlüssig in eine derartige Klemmhülse eingeführt und mit dieser verklemmt wird.

Je nach Einsatzverhältnissen kann es auch zweckmäßig sein, die Gleitkufen 10 mit drei oder mehr Stängelhebem auszugestalten.

### Bezugszeichenliste

- 1: Mähbalken
- 2: Mähscheibe
- 3: Mähklinge
- 4: Zapfen
- 5: Flugkreis
- 6: Drehachse
- 7: Maschinengestell
- 8: Stängelheber
- 9: Kragarm
- 10: Gleitkufe
- 11: Gleitkufenvorbau
- 12: Gleitkufenbefestigungspunkte
- 13: Kastenprofil
- 14: Gleitflächenelement
- 15: ansteigende Gleitfläche
- 16: Rotationsebene
- F: Fahrtrichtung
- α: Neigungswinkel

## Patentansprüche

1. Mähbalken (1) für ein Scheibenmähwerk zum Anbau oder zur Anhängung an Traktoren oder selbstfahrenden Erntemaschinen mit wenigstens zwei benachbarten um aufrechte Drehachsen (6) umlaufend angetriebenen, mit wenigstens zwei an Zapfen (4) gelagerten frei beweglichen Mähklingen (3) besetzten Mähscheiben (2), die unterhalb der Mähscheiben (2) in einem die Mähscheiben (2) aufnehmenden Maschinengestell (7) gelagert sind, **dadurch gekennzeichnet, dass** wenigstens einer Mähscheibe (2) in Fahrtrichtung (F) wenigstens ein Stängelheber (8) vorgelagert ist.

2. Mähbalken nach Anspruch 1, **dadurch gekennzeichnet, dass** der wenigstens eine Stängelheber (8) ein Gleitflächenelement (14) aufweist, der eine entgegen der Fahrtrichtung (F) und gegenüber der Rotationsebene (16) der Mähklingen (3) ansteigende Gleitfläche (15) mit einem spitzen Winkel (α) aufweist.

3. Mähbalken nach Anspruch 2, **dadurch gekennzeichnet, dass** das Gleitflächenelement (14) als austauschbares Element gegenüber dem Kragarm (9) ausgebildet ist.

4. Mähbalken nach Anspruch 3, **dadurch gekennzeichnet, dass** das Gleitflächenelement (14) als Kunststoffelement ausgebildet ist.

5. Mähbalken nach Anspruch 1, **dadurch gekennzeichnet, dass** der Stängelheber (8) mittels eines Kragarms (9) unterhalb der Rotationsebene (16) der Mähscheiben (2) direkt oder indirekt an dem Maschinengestell (7) abgestützt ist.

6. Mähbalken nach Anspruch 1 bis 5, **dadurch gekennzeichnet, dass** der Stängelheber (8) an einer Gleitkufe (10) befestigt ist.

7. Mähbalken nach Anspruch 1 bis 6, **dadurch gekennzeichnet, dass** der Stängelheber (8) durch eine Klemmverbindung am Maschinengestell (7) oder an der Gleitkufe (10) lös- und auswechselbar abgestützt ist.

8. Mähbalken nach Anspruch 1 bis 7, **dadurch gekennzeichnet, dass** Gleitkufe (10) und Stängelheber (8) gemeinsam eine auswechselbare Einheit bilden.

9. Mähbalken nach Anspruch 1 bis 8, **dadurch gekennzeichnet, dass** eine Gleitkufe (10) zwei Stängelheber (8) aufweist.

10. Mähbalken nach Anspruch 1 bis 9, **dadurch gekennzeichnet, dass** eine Gleitkufe (10) drei Stängelheber (8) aufweist.
